# EUROPÄISCHE PATENTANMELDUNG

(11) **EP 2 306 342 A1**
(43) Veröffentlichungstag der Anmeldung: **06.04.2011**
(21) Anmeldenummer: 10173142.0
(22) Anmeldetag: 18.08.2010
(51) Int. Cl.: G06F 17/30

(54) **View-Server und Verfahren zur Bereitstellung von spezifischen Daten von Objekten und/oder Objekttypen**

(30) Priorität: 29.09.2009 DE 102009043456; 17.03.2010 DE 102010011664
(71) Anmelder: SIEMENS AKTIENGESELLSCHAFT, 80333 München (DE)
(72) Erfinder: Ehben, Thomas, 26446 Friedeburg (DE)

(57) **Zusammenfassung**

Ein zentraler Datenserver (VS) stellt spezifische Daten (D) von Objekten (Ob) und/oder Objekttypen (ObT) bereit, wobei die Daten (D) als Metadaten (MD) ausgebildet sind, die an anderer Stelle außerhalb des Speichers (Sp) des Datenservers (VS) zur Verfügung gestellte Inhalte charakterisiert. Die Serverdaten haben einen Gültigkeitsbereich (G) und/oder Lösungsraum (LR), innerhalb dessen sie einheitlich und für jeden Beteiligten gültig sind. Der Datenserver (VS) liefert die Meta-Informationen auf Anfrage. Somit ist eine herstellerunabhängige Datenverwaltung möglich.

## Beschreibung

Die Erfindung betrifft einen View-Server und ein Verfahren zur Bereitstellung von spezifischen Daten von Objekten und/oder Objekttypen.

Komplexe industrielle Lösungen sind gekennzeichnet durch eine Vielzahl von Informationen und Daten, die während ihres gesamten Lebenszyklus erforderlich sind und auf die jederzeit zugegriffen werden kann/muss. Ein Lebenszyklus einer Anlage oder einer industriellen Lösung beinhaltet die Implementierung der Lösung, den Betrieb, die Wartung, die Modernisierung der Anlage, den Rückbau, usw. Zusätzlich ist das industrielle Lösungsgeschäft durch eine wachsende Anzahl von Beteiligten gekennzeichnet, beispielsweise Hersteller, Subkontraktoren, Betreiber, Serviceprovider, Ingenieurbüros etc. Dabei kommt es häufig zu Medienbrüchen und uneffektiver Kommunikation zwischen den Beteiligten. Medienbrüche entstehen bei Zusammenarbeit verschiedener Beteiligter, die keinen Zugriff auf eine gemeinsame Datenbasis haben. Weiterhin entstehen Medienbrüche entlang des Lifecycles einer Lösung durch Entstehen aufeinander unabgestimmter Datenbasen.

Dieses Problem wird verschärft durch die immer komplexer werdende Zusammenarbeit vieler Dienstleister über die Lifecycles, beispielsweise beim Konzept der digitalen Fabrik. Hier findet eine Vorabsimulation kompletter Produktionsanlagen anhand teils abstrahierter technischer Daten der später zu verbauenden Komponenten statt. Die hierdurch gewonnen Erkenntnisse umfassen z. B. Kollisionserkennungen, Durchsatzabschätzungen, Entwicklung von Wartungsplänen sowie Sicherstellung günstiger Ergonomien für Bedienungs- und Wartungspersonal.

In der bisherigen Lösung werden innerhalb einzelner Applikationen verschiedene Sichtweisen (Views) aufzumodellierende Objekte definiert. Diese Objektviews sind Insellösungen, beispielsweise das Design-Framework-Cadence DF II zur Entwicklung integrierter Schaltkreise. Die sogenannten Views ermöglichen die Abfrage themen- oder aufgabenspezifischer Informationen für ein technisches Objekt aus unterschiedlichen Fragestellungen heraus. Ein View ist gemäß Wikipedia, "Sicht (Datenbank)", Ausdruck Juli 2009, eine logische Relation in einem Datenbanksystem, auch virtuelle Relation oder virtuelle Tabelle genannt. Ein View stellt im Wesentlichen einen Alias für eine Abfrage dar.

Weiterhin existieren bisher innerhalb einer Organisation häufig toolunabhängige, teils textbasierte und bildhafte Beschreibungen für proprietäre, firmeninterne Abläufe und Projekte, beispielsweise mittels ARIS.

Aufgabe der Erfindung ist es, einen Server und ein Verfahren bereitzustellen, die übergreifend komplexe industrielle Lösungen unter Vermeidung von Medienbrüchen ermöglichen.

Die Aufgabe der Erfindung wird gelöst durch die Merkmale der unabhängigen Ansprüche.

Vorteilhafte Weiterbildungen der Erfindung sind in den abhängigen Patentansprüchen dargestellt.

Ein Attribut (von lateinisch attribuere = zuteilen, zuordnen) ist ein im Wert einer Variablen gespeichertes Merkmal eines konkreten Objekts. In einer Programmiersprache wird das Objekt durch die Gesamtheit seiner Attributwerte beschrieben, für jedes Attribut wird ein Typ vereinbart, für die Gesamtheit der Attribute gleicher Objekte wird eine Klasse definiert, die also ein Muster für alle Objekte mit gleichen Merkmalen oder in der Realisierung ein Muster für die Speicherung der variablen Merkmalswerte für alle konkreten Objekte ist, die durch die Klasse typisiert werden. Das Objekt wird durch eine Referenz angesprochen und den Attributwert erreicht man durch Ansprechen der Referenz des konkreten Objektes plus Selektion des Attributs gemäß der Klassendefinition. Unter Dateiattributen versteht man verschiedene Angaben über eine Computerdatei, die nicht direkt zu den eigentlichen Inhalten der Datei gehören.

Ein View ist eine logische Relation in einem Datenbanksystem, auch virtuelle Relation oder virtuelle Tabelle genannt. Diese logische Relation wird über eine im Datenbankmanagementsystem (DBMS) gespeicherte Abfrage definiert. Wann immer eine Abfrage diese View benutzt, wird diese zuvor durch das Datenbankmanagementsystem berechnet. Ein View stellt im Wesentlichen einen Alias für eine Abfrage dar. Ein View-Server liefert herstellerunabhängig den Typen und vorhandene Views der Instanzen in Abhängigkeit der Instanz-ID, wie untenstehend mit der Relation bzw. Funktion Typ=Typ(Objekt-ID) ausgedrückt ist.

Unter einer Methode versteht man in der objektorientierten Programmierung ein Konstrukt, das das Verhalten von Objekten beschreibt

Formal bezeichnet ein Datentyp in der Informatik die Zusammenfassung von Objektmengen mit den darauf definierten Operationen. Dabei werden durch den Datentyp des Datensatzes unter Verwendung einer so genannten Signatur ausschließlich die Namen dieser Objekt- und Operationsmengen spezifiziert. Ein so spezifizierter Datentyp besitzt noch keine Semantik.

Serviceorientierte Architektur (SOA), engl. service-oriented architecture, auch dienstorientierte Architektur, ist ein Ansatz der Informationstechnik aus dem Bereich der verteilten Systeme, um Dienste (Services) von Mitarbeitern und Organisationen zu strukturieren und zu nutzen. Eine besondere Rolle spielt dabei die Orientierung an Geschäftsprozessen, deren Abstraktionsebenen die Grundlage für konkrete Serviceimplementierungen sind.

Die Unified Modeling Language, kurz UML (auf deutsch "Vereinheitlichte Modellierungssprache"), ist eine von der Object Management Group (OMG) entwickelte und standardisierte Sprache für die Modellierung von Software und anderen Systemen. Sie ist auch über ISO standardisiert (ISO/IEC 19501). Im Sinne einer Sprache definiert UML dabei Bezeichner für die meisten für die Modellierung wichtigen Begriffe und legt mögliche Beziehungen zwischen diesen Begriffen fest. UML definiert weiter graphische Notationen für diese Begriffe und für Modelle von statischen Strukturen und von dynamischen Abläufen, die man mit diesen Begriffen formulieren kann.

Der englische Begriff Radio Frequency Identification (RFID) bedeutet im Deutschen *Identifizierung mit Hilfe von elektromagnetischen Wellen.* RFID ermöglicht die automatische Identifizierung und/oder Lokalisierung von Gegenständen und Lebewesen und erleichtert damit erheblich die Erfassung und Speicherung von Daten.

Die Extensible Markup Language (engl. für "erweiterbare Auszeichnungssprache"), abgekürzt XML, ist eine Auszeichnungssprache zur Darstellung hierarchisch strukturierter Daten in Form von Textdaten. XML wird u. a. für den Austausch von Daten zwischen Computersystemen eingesetzt, speziell über das Internet.

SQL ist das Kürzel für Structured Query Language und ist eine Datenbanksprache zur Definition, Abfrage und Manipulation von Daten in relationalen Datenbanken. SQL ist von ANSI und ISO standardisiert und wird von fast allen gängigen Datenbanksystemen unterstützt.

Die Web Service (WS) -Business Process Execution Language (BPEL) ist eine XML-basierte Sprache zur Beschreibung von Geschäftsprozessen, deren einzelne Aktivitäten durch Webservices implementiert sind.

Der View-Server zur Bereitstellung spezifischer Daten von Objekten und/oder Objekttypen enthält Daten, die als Metadaten ausgebildet sind, die an einer außerhalb des Speichers des Servers angeordneten Stelle zur Verfügung stehende Inhalte charakterisieren. Die Daten weisen einen Gültigkeitsbereich und/oder Lösungsraum auf, innerhalb dessen sie einheitlich sind und vorzugsweise für alle auf den Lösungsraum zugreifenden Einheiten gültig sind.

Bevorzugt sind das Datenformat und das Austauschprotokoll der Daten für je einen Gültigkeitsbereich bzw. Lösungsraum einheitlich standardisiert.

Eine Anfrage (Input) an den View-Server enthält bevorzugt eine Objekt-ID, einen Typ, einen View und/oder ein Attribut, und die jeweilige Antwort vom Server (Output(Input)) einen "Typ(Objekt-ID)", einen "View(Typ)", "Attribute(View)", einen "Datentyp(Attribut)", einen "Wertebereich(Attribut)", "Services(View)", "Service(Typ)" und/oder eine "Methoden(View)".

Der Lösungsraum repräsentiert bzw. bildet bevorzugt ab:
- eine Baustelle,
- ein Projekt,
- eine Anlage, für deren Bereich einen Satz von Objektdaten vereinbart und standardisiert ist,
- einen Konzern,
- ein Konsortium, das Objektdaten für mehrere Projekte verwendet, und/oder
- eine Industrie und/oder Branche und/oder Domäne, die weltweit einheitliches Datenstandards verwendet, und/oder weltweit standardisierte Daten.

Konkrete Dateninhalte, beispielsweise Werte der Attribute und Services, werden außerhalb des View-Servers vorgehalten.

Der View-Server liefert bevorzugt Meta-Informationen, die die Detaildaten spezifizieren und charakterisieren.

Bevorzugt enthalten die Detaildaten/-typen, die im Server gespeichert werden, beispielsweise elementare Komponenten, Anlagen, Subsysteme (Dampfturbine), Komplettanlagen (Kraftstationen), Maschinen, z. B. Industrieroboter, Warenbehälter z. B. 40-Fuss-Isocontainer. Insbesondere sind die Definitionen herstellerspezifischer Views/Objekttypen sowie von Attributen und Services für Views enthalten.

Der Server setzt bevorzugt auf herkömmliche Datenbanken, beispielsweise SQL-Server, auf, wobei der Datenaustausch bevorzugt mit dem Metaformat XML sowie über das Internet erfolgt, wobei Zugriffe auf den Server beispielsweise erfolgen können während der Engineeringphase einer Lösung, während des Grob-Engineering z. B. Machbarkeitsstudien, Angebotsphasen, Detail-Engineering incl. Projektentwicklung, Baustelle, Komponenten-Engineering.

Bevorzugt werden während des Betriebs einer Lösung eines Lösungsraums Abfragen manuell z. B, durch Servicetechniker für Wartungsmaßnahmen, oder automatisch, beispielsweise durch Abfrage der Betriebskosten durch ein BPEL-Script durchgeführt.

Bevorzugt ist die Lösung mit dem Server geeignet für eine Logistikkette. Ein Objekt, beispielsweise eine Ware, kennt seinen Ort, beispielweise die ID des Regalplatzes,
das Objekt (die Ware) bestimmt die ID des dazugehörigen Versandlagers, in dem sich das Regal befindet, vorzugsweise indem das Objekt (die Ware) einen Service des Regals abfragt, dessen Existenz das Objekt (die Ware) vom Server (S) abgefragt hat,
wobei das Objekt (die Ware) an das Versandlager angeschlossene Spediteure abfragt,
wobei das Objekt (die Ware) über registrierte Services die Versandkonditionen der Spediteure abfragt,
wobei das Objekt (die Ware) ihre eigene Übernahme durch einen Spediteur ihrer Wahl veranlasst,
wobei das Objekt (die Ware) über weitere Instanzen ihren weiteren Weg identifiziert und auswählt, wobei sie jeder Station ihres Weges auf den Server zugreift.

Bevorzugt ist die für den Zugriff auf den Server erforderliche Objekt-ID eines Objekts auf einem RFID-Tag gespeichert, das physisch mit dem Objekt verbunden ist, wodurch eine Person oder ein anderes Objekt durch Zugriff auf den Server Objektdaten zu dem Objekt abfragen kann.

Bevorzugt sind akzeptierte Standards miteinander gekoppelt, beispielsweise digitale Fabrik, SOA, Typ/Instanz-Modell, Verhaltens- und Strukturbeschreibung z. B. mit UML Internet der Dinge, RFID, XML, SQL.

Die Standards für Strukturierung und Übertragung der Metadaten im Server werden von einer für den jeweiligen Lösungsraum mandatierten Autorität definiert, beispielsweise zum Vergeben von ID-Adressräumen.

Bevorzugt werden zur Bereitstellung spezifischer Daten die zur Verfügung stehende Beschreibungen bzw. Metadateien eines Objekts und/oder eines Objekttyps vom View-Server auf Anfrage geliefert, und die konkreten physikalischen und logischen Daten bzw. Inhalte von zu modellierenden Objekttypen in separaten außerhalb des View-Servers liegenden Datenbanken, insbesondere der Komponenten- oder Systemhersteller, vom Server abgerufen.

Die Modellierung, Simulation und Optimierung von Systemen und Anlagen werden ebenfalls unterstützt. Es können insgesamt für eine Modellierung oder Simulation zur Verfügung stehende Beschreibungen (Metadateien) eines Objekts oder eines Typen vom Server abgefragt werden. Die konkreteren physikalischen und logischen Daten von zu modellierenden Objekttypen können dann in separaten Datenbanken der Komponenten- oder Systemhersteller abgerufen werden.

Es wird somit die herstellerübergreifende Modellierung digitaler Fabriken und Anlagen ermöglicht. Modellierung, Simulation und Optimierung werden unterstützt, indem der relevante Datenumfang für eine Modellierung und das Vorhandensein zur Modellierung erforderlicher Daten abgefragt werden kann.

Implementierung und Betrieb industrieller Lösungen in der realen Welt können effizienter erfolgen als heute. Weltweit und brachenübergreifend lässt sich ein Standard für den Austausch von Daten zu technologischen Objekten definieren, verwalten und anwenden.

Die Erfindung erleichtert das Anlagengeschäft durch die Kopplung weltweit beachteter z. T. bereits längst akzeptierter Standards und Paradigmen, wie z.B.
- Digitale Fabrik
- SOA
- Typ-/Instanz-Modell
- Verhaltens- und Strukturbeschreibung, z.B. mit UML
- Internet der Dinge (Internet of Things)
- RFID
- XML
- SQL

Im Folgenden ist die Figur zur Erläuterung der Erfindung dargestellt.

Es zeigt:

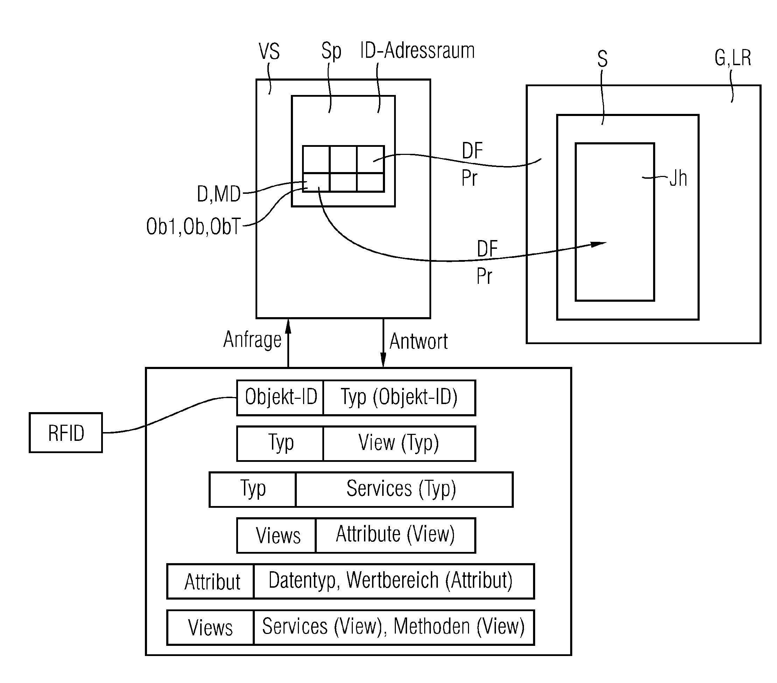

Figur 1: eine schematische Übersicht des Servers zur Bereitstellung spezifischer Daten

In Figur 1 ist ein Server S zur Bereitstellung spezifischer von Objekten Ob und/oder Objekttypen ObT dargestellt, wobei die Daten D als Metadaten MD ausgebildet sind, die an einer außerhalb des Speichers Sp des Servers S angeordneten Stelle zur Verfügung stehende Inhalte Ih charakterisieren. Die Daten D weisen einen Gültigkeitsbereich G und/oder Lösungsraum LR auf, innerhalb dessen sie einheitlich sind und vorzugsweise für alle auf den Lösungsraum LR zugreifenden Einheiten gültig sind.

Das Datenformat DF der Daten D,MD und das Austauschprotokoll Pr der Daten D,MD sind für je einen Gültigkeitsbereich G bzw. Lösungsraum LR einheitlich standardisiert.

Jeder Gültigkeitsbereich G bzw. Lösungsraum LR wird durch einen Server S abgebildet.

Eine Anfrage "Input" an den View-Server VS enthält eine Objekt-ID, einen Typ, einen View und/oder ein Attribut. Die Antwort vom View-Server (Output(Input)) enthält einen "Typ(Objekt-ID)", einen "View(Typ)", "Attribute(View)", einen "Datentyp(Attribut)", einen "Wertebereich(Attribut)", "Services(View)" "Services(Typ) und/oder "Methoden(View)".

Der Lösungsraum LR kann
- eine Baustelle,
- ein Projekt,
- eine Anlage, für deren Bereich ein Satz von Objektdaten Obd vereinbart und standardisiert ist,
- ein Konzern,
- ein Konsortium, das Objektdaten für mehrere Projekte verwendet, und/oder
- eine Industrie und/oder Branche, die weltweit einheitliches Datenstandards verwendet, und/oder weltweit standardisierte Daten,
abbilden bzw. repräsentieren.

Konkrete Dateninhalte, beispielsweise Werte der Attribute "Attribut(View)" und Services "Service(View)", werden außerhalb des View-Servers VS vorgehalten. Der View-Server VS liefert Meta-Informationen, die die Detaildaten spezifizieren und charakterisieren.

Die Detaildaten/-typen, die im Server S gespeichert werden, enthalten beispielsweise elementare Komponenten, Anlagen, Subsysteme (Dampfturbine), Komplettanlagen (Kraftstationen), Maschinen, z. B. Industrieroboter, Warenbehälter z. B. 40-Fuss-Isocontainer. Insbesondere sind die Definition herstellerspezifischer Views/Objekttypen sowie von Attributen und Services für Views enthalten.

Der View-Server VS setzt auf herkömmliche Datenbanken, beispielsweise SQL-Server, auf. Der Datenaustausch erfolgt bevorzugt mit dem Metaformat XML sowie über das Internet, wobei Zugriffe auf den View-Server S beispielsweise erfolgen können während der Engineeringphase einer Lösung, während des Grob-Engineering z. B. Machbarkeitsstudien, Angebotsphasen, Detail-Engineering incl. Projektentwicklung, Baustelle, Komponenten-Engineering.

Die für den Zugriff auf den View-Server VS erforderliche Objekt-ID eines Objekts ist beispielsweise auf einem RFID-Tag RFID vorhanden, das physisch mit dem Objekt verbunden ist, wodurch eine Person oder ein anderes Objekt Ob1 durch Zugriff auf den View-Server VS Objektdaten zu dem Objekt Ob abfragbar sind.

Die Standards für Strukturierung und Übertragung der Metadaten MD im View-Server VS werden von einer für den jeweiligen Lösungsraum mandatierten Autorität definiert sind, beispielsweise zum Vergeben von ID-Adressräumen.

Die zur Verfügung stehende Beschreibungen bzw. Metadateien MD eines Objekts Ob und/oder eines Objekttyps ObT werden vom View-Server VS auf Anfrage geliefert (Antwort). Die konkreten physikalischen und logischen Daten bzw. Inhalte (Ih) werden bei zu modellierenden Objekttypen in separaten außerhalb des View.Servers VS liegenden Datenbanken, insbesondere der Komponenten- oder Systemhersteller, abgerufen.

## Patentansprüche

1. View-Server zur Bereitstellung spezifischer Daten (D) von Objekten (Ob) und/oder Objekttypen (ObT), wobei die spezifischen Daten (D) als Metadaten (MD) ausgebildet sind, die an einer außerhalb des Speichers (Sp) des View-Servers (VS) angeordneten Stelle zur Verfügung stehende Inhalte (Ih) charakterisieren, wobei die Inhalte (Ih) einen Gültigkeitsbereich (G) und/oder Lösungsraum (LR) aufweisen, innerhalb dessen sie einheitlich sind und vorzugsweise für alle auf den Lösungsraum (LR) zugreifenden Einheiten gültig sind.

2. View-Server nach Anspruch 1, **dadurch gekennzeichnet, dass** das Datenformat (DF) und das Austauschprotokoll (Pr) der spezifischen Daten (D) einen für weitere Daten (Ih, G, LR) definierten Gültigkeitsbereich (G) bzw. Lösungsraum (LR) beschreiben.

3. View-Server nach einem der vorhergehenden Ansprüche, **dadurch gekennzeichnet, dass** eine Anfrage (Input) an den View-Server (VS) eine Objekt-ID, einen Typ, einen View und/oder ein Attribut enthält, und die Antwort vom Server (Output(Input)) einen "Typ(Objekt-ID)", einen "View(Typ)", "Attribute(View)", einen "Datentyp(Attribut)", einen "Wertebereich(Attribut)", "Services(View)", Services(Typ) und/oder "Methoden(View)" enthalten.

4. View-Server nach einem der vorhergehenden Ansprüche, **dadurch gekennzeichnet, dass** der Lösungsraum (LR)
- eine Baustelle,
- ein Projekt,
- eine Anlage, für deren Bereich ein Satz von Objektdaten (Obd) vereinbart und standardisiert ist,
- ein Konzern,
- ein Konsortium, das Objektdaten für mehrere Projekte verwendet, und/oder
- eine Industrie und/oder Branche, die weltweit einheitliches Datenstandards verwendet, und/oder weltweit standardisierte Daten,
abbildet bzw. repräsentiert.

5. View-Server nach einem der vorhergehenden Ansprüche, **dadurch gekennzeichnet, dass** konkrete Dateninhalte (Ih) enhaltende weitere Daten (Ih) , beispielsweise Werte der Attribute und Services, außerhalb des View-Servers (VS) vorgehalten werden.

6. View-Server nach einem der vorhergehenden Ansprüche, **dadurch gekennzeichnet, dass** der View-Server (VS) Meta-Informationen liefert, die die weiteren Daten spezifizieren und charakterisieren.

7. View-Server nach einem der vorhergehenden Ansprüche, **dadurch gekennzeichnet, dass** die weiteren Daten und/oder Datentypen, die in einem Server (S) außerhalb des View-Servers (VS) gespeichert werden beispielsweise elementare Komponenten, Anlagen, Subsysteme, z.B. eine Dampfturbine, Komplettanlagen, z.B. eine Kraftstation, Maschinen, z.B. Industrieroboter und/oder Warenbehälter z. B. 40-Fuss-Isocontainer enthalten, wobei insbesondere die Definition herstellerspezifischer Views/Objekttypen sowie von Attributen und Services für Views enthalten sind.

8. View-Server nach einem der vorhergehenden Ansprüche, **dadurch gekennzeichnet, dass** der View-Server (VS) auf herkömmliche Datenbanken, beispielsweise SQL-Server, aufsetzt, wobei der Datenaustausch bevorzugt mit dem Metaformat XML sowie über das Internet erfolgt, wobei Zugriffe auf den View-Server (VS) beispielsweise erfolgen können während der Engineeringphase einer Lösung, während des Grob-Engineerings z. B. Machbarkeitsstudien, Angebotsphasen, während des Detail-Engineerings incl. Projektentwicklung, Errichtung, Komponenten-Engineering.

9. View-Server nach einem der vorhergehenden Ansprüche, **dadurch gekennzeichnet, dass** der View-Server (VS) während des Betriebs einer Lösung (L) eines Lösungsraums (LR) durch Abfrage der Betriebskosten durch ein BPEL-Script, insbesondere bei erforderlichen Wartungsmaßnahmen, beim VS-Server (VS) abfragbar ist.

10. View-Server nach einem der vorhergehenden Ansprüche, **dadurch gekennzeichnet, dass** die für den Zugriff auf den View-Server (VS) erforderliche Objekt-ID eines Objekts (Ob) auf einem RFID-Tag gespeichert ist, das physisch mit dem Objekt verbunden ist, wodurch durch eine Person oder ein anderes Objekt (Ob1) durch Zugriff auf den View-Server (VS) als Metadaten ausgebildete spezifische Daten (D) zu dem Objekt (Ob) abfragbar sind.

11. View-Server nach einem der vorhergehenden Ansprüche, **dadurch gekennzeichnet, dass** akzeptierte Standards miteinander gekoppelt sind, beispielsweise digitale Fabrik, SOA, Typ/Instanz-Modell, Verhaltens- und Strukturbeschreibung z. B. mit UML Internet der Dinge, RFID, XML, SQL.

12. View-Server nach einem der vorhergehenden Ansprüche, **dadurch gekennzeichnet, dass** die Standards für Strukturierung und Übertragung der auf dem View-Server(VS) liegenden als Metadaten ausgebildeten spezifischen Daten (D) von einer für den jeweiligen Lösungsraum mandatierten Autorität definiert sind, beispielsweise zum Vergeben von ID-Adressräumen.

13. Verfahren zur Bereitstellung spezifischer Daten (D) von Objekten (Ob) und/oder Objekttypen (ObT) mit Hilfe des View-Servers (VS) nach einem der vorherigen Ansprüche, **dadurch gekennzeichnet, dass** die spezifischen Danten (D), beispielsweise die zur Verfügung stehende Beschreibungen bzw. Metadateien (D) eines Objekts (Ob) und/oder eines Objekttyps (ObT), vom View-Server (VS) auf Anfrage geliefert werden (Antwort), und weitere Daten, beispielsweise die konkreten physikalischen und logischen Daten bzw. Inhalte (Ih) von zu modellierenden Objekttypen, in separaten außerhalb des View-Servers (VS) liegenden Datenbanken, insbesondere der Komponenten- oder Systemhersteller, abgerufen werden.
